# EUROPÄISCHE PATENTSCHRIFT

(11) **EP 3 752 762 B1**
(45) Veröffentlichungstag und Bekanntmachung des Hinweises auf die Patenterteilung: **23.10.2024**
(21) Anmeldenummer: 19705758.1
(22) Anmeldetag: 15.02.2019
(51) Int. Cl.: F16L 41/02, B60R 16/00, H01R 13/00, F16L 53/38

(54) **VERBINDUNGSANORDNUNG ZUM VERBINDEN VON BEHEIZBAREN FLUIDLEITUNGEN**
CONNECTION ARRANGEMENT FOR CONNECTING HEATABLE FLUID LINES
ENSEMBLE DE LIAISON SERVANT À RELIER DES CONDUITS POUR FLUIDE POUVANT ÊTRE CHAUFFÉS

(30) Priorität: 16.02.2018 DE 102018103571
(43) Veröffentlichungstag der Anmeldung: 23.12.2020
(73) Patentinhaber: Voss Automotive GmbH, 51688 Wipperfürth (DE)
(72) Erfinder: BAENSCH, Andreas, 50259 Pulheim (DE); SACHSE, Martin, 51688 Wipperfürth (DE); HÄGER, Daniel, 51688 Wipperfürth (DE); HEINRICHS, Eugen, 51702 Bergneustadt (DE); ISENBURG, Marco, 40885 Ratingen (DE); HESS, Jochem-Andreas, 51688 Wipperfürth (DE); WILMS, Waldemar, 51709 Marienheide (DE); RÖHRIG, Lukas, 51709 Marienheide (DE)
(74) Vertreter: Dr. Solf & Zapf Patent- und Rechtsanwalts PartG mbB
(86) Internationale Anmeldenummer: PCT/EP2019/053860
(87) Internationale Veröffentlichungsnummer: WO 2019/158713

(56) Entgegenhaltungen:
- EP-A1- 2 816 272
- EP-A1- 3 276 243
- DE-A1- 102005 057 780
- DE-A1- 102010 055 520
- DE-U1- 8 900 869

## Beschreibung

Die Erfindung betrifft eine Verbindungsanordnung zum Verbinden von beheizbaren Fluidleitungen, mit mindestens einem ersten Kupplungsteil und mindestens einem zweiten Kupplungsteil. Das erste Kupplungsteil und das zweite Kupplungsteil sind miteinander verbindbar, beispielsweise indem sie zusammengesteckt werden. Das erste Kupplungsteil und das zweite Kupplungsteil weisen jeweils mindestens eine erste Fluidleitung, mindestens eine erste Fluidleitungsschnittstelle, mindestens einen ersten elektrischen Leiter und mindestens eine erste elektrische Schnittstelle auf, und wobei die ersten Fluidleitungsschnittstellen (7a,7b) und die ersten elektrischen Schnittstellen (9a,9b) parallel zu einer Steckachse des ersten Kupplungsteils (3) und des zweiten Kupplungsteils (4) ausgerichtet sind.

Beheizbare Fluidleitungen sind in unterschiedlichen Formen bekannt und kommen beispielsweise in Fluidverteilungssystemen von Kraftfahrzeugen zur Anwendung. Bei dem Fluid kann es sich zum Beispiel um Wasser für eine Scheibenwaschanlage oder eine wässrige Harnstofflösung handeln, wie sie zur Reduzierung von Stickoxiden in Abgas-SCR-Katalysatoren (SCR = Selective Catalytic Reduction = selektive katalytische Reduktion) verwendet wird. Bei niedrigen Umgebungstemperaturen kann die Flüssigkeit einfrieren. Deshalb werden fluidführende Elemente, wie Pumpen oder Fluidleitungen, beheizt, um das Einfrieren zu verhindern oder um das bereits eingefrorene Fluid wieder aufzutauen. Dazu werden innerhalb des Fluidsystems beheizbare Komponenten über Fluidleitungen verbunden, wobei auch diese elektrisch beheizt sein können.

DE 89 00 869 U1 offenbart ein wärmeisoliertes Verbindungs- oder Verteilerstück für beheizbare Schläuche. Das Verbindungsstück umfasst ein Verbindungselement, das endseitig in zu verbindende Schläuche einschiebbar ist. Das Verbindungsstück umfasst ferner zwei Halbschalen, die nach abgeschlossenem Verbindungsvorgang miteinander verbunden werden.

EP 2 816 272 A1 offenbart eine beheizbare Fluidleitung, deren Verwendung sowie ein Verfahren zu ihrer Herstellung. Die beheizbare Fluidleitung weist Kupplungsteile mit jeweils einer ersten Fluidleitungsschnittstelle und jeweils zwei elektrischen Schnittstellen auf, die mit einem jeweils korrespondierenden Kupplungsteil verbindbar sind.

DE 10 2010 055 520 A1 offenbart eine konfektionierte Medienleitung sowie Verwendung in einem SCR-Katalysator-System. Die konfektionierbare Medienleitung offenbart endseitig eine Mehrzahl von Fluidleitungsschnittstellen, die in einem Sammler zusammenfassbar sind.

EP 3 276 243 A1 offenbart eine Kraftfahrzeug-Fluidleitung. Die Kraftfahrzeug-Fluidleitung ist zur Durchleitung eines fluiden Mediums, hier zur Durchleitung von Harnstofflösungen, ausgebildet. Die Fluidleitung weist über einen Teil ihrer Länge parallel zueinander verlaufenden Innen- und Außenleitungen auf. Zum Verbinden der Fluidleitung ist ein Verbinder vorgesehen.

DE 10 2005 057780 A1 zeigt eine Fluidkupplungsanordnung, die mindestens ein erstes Kupplungsteil zum Verbinden eines ersten fluidführenden Elements und mindestens eines zweiten fluidführenden Elements im Zusammenwirken mit mindestens einem zweiten Kupplungsteil aufweist, wobei ein Fluid zwischen dem ersten fluidführenden Element und dem mindestens einen zweiten fluidführenden Element durch die Fluidkupplungsanordnung strömt. Dieses Dokument zeigt weiterhin ein Fluidverteilungssystem beispielsweise in einem Kraftfahrzeug, das eine solche Fluidkupplungsanordnung verwendet. Um eine Fluidkupplungsanordnung und ein entsprechendes Fluidverteilungssystem anzugeben, das auf möglichst einfache und sichere Weise Elemente einer Fluidförderkette fluidisch wie auch elektrisch miteinander verbindet, weist die Fluidkupplungsanordnung weiterhin mindestens eine elektrische Steckverbinderanordnung zum lösbaren oder unlösbaren Verbinden mindestens einer ersten elektrischen Leitung mit mindestens einer zweiten elektrischen Leitung auf.

Die aus dem Stand der Technik bekannten Verbindungsanordnungen weisen allerdings den Nachteil auf, dass insbesondere bei Mehrleitungssystemen ein hoher Anpassungs- und Montageaufwand entsteht.

Der vorliegenden Erfindung liegt daher die Aufgabe zu Grunde, eine Verbindungsanordnung, insbesondere für Mehrleitungssysteme, anzugeben, bei der der Anpassungs- und Montageaufwand reduziert ist.

Die vorliegende Aufgabe ist durch eine Verbindungsanordnung gemäß Anspruch 1 gelöst.

Die Verbindungsanordnung dient dem Verbinden von beheizbaren Fluidleitungen, beispielsweise dem Verbinden von mindestens zwei Abschnitten einer Fluidleitung sowie gleichzeitig dem Verbinden eines elektrischen Leiters, insbesondere Heizleiters, bzw. von mindestens zwei Abschnitten eines elektrischen Leiters. Die Verbindungsanordnung weist mindestens ein erstes Kupplungsteil und mindestens ein zweites Kupplungsteil auf. Das erste Kupplungsteil und das zweite Kupplungsteil weisen jeweils mindestens eine erste Fluidleitung, mindestens eine erste Fluidleitungsschnittstelle, mindestens einen ersten elektrischen Leiter, insbesondere einen Heizleiter, und mindestens eine erste elektrische Schnittstelle auf. Das erste Kupplungsteil und das zweite Kupplungsteil sind miteinander verbindbar, wobei beim Zusammenstecken mindestens die erste Fluidleitungsschnittstelle des ersten Kupplungsteils mit der ersten Fluidleitungsschnittstelle des zweiten Kupplungsteils und die erste elektrische Schnittstelle des ersten Kupplungsteils mit der ersten elektrischen Schnittstelle des zweiten Kupplungsteils gleichzeitig verbunden werden.

Die Verbindungsanordnung zeichnet sich dadurch aus, dass das erste Kupplungsteil und/oder das zweite Kupplungsteil mindestens einen Fluidleitungsteiler zum Aufteilen eines in der Fluidleitung geführten Fluidstroms aufweist. Vorzugsweise ist entweder in dem ersten Kupplungsteil oder in dem zweiten Kupplungsteil ein Fluidleitungsteiler angeordnet. Der Fluidleitungsteiler teilt den Fluidstrom der ersten Fluidleitung des ersten Kupplungsteils oder der ersten Fluidleitung des zweiten Kupplungsteils in mindestens zwei Fluidströme auf. Durch die Teilung des Fluidstroms können mindestens zwei voneinander unabhängige Abnahmestellen, beispielsweise zwei unterschiedliche Stellen in Bezug auf einen Katalysator oder an zwei Katalysatoren eines SCR-Systems, versorgt werden. Dazu ist vorgesehen, dass das zweite Kupplungsteil mindestens eine zweite Fluidleitung aufweist, die den Fluidstrom zu einer zweiten Abnahmestelle leiten kann, während die erste Fluidleitung des zweiten Kupplungsteils den Fluidstrom zu einer ersten Abnahmestelle leitet. Beispielsweise ist vorgesehen, dass der Fluidleitungsteiler zumindest die erste Fluidleitungsschnittstelle des ersten Kupplungsteils oder des zweiten Kupplungsteils zumindest teilweise ausbildet. Der Fluidleitungsteiler ist vorzugsweise innerhalb des Gehäuses des ersten und/oder zweiten Kupplungsteils angeordnet.

Der erste elektrische Leiter des ersten Kupplungsteils ist als Heizleiter in Windungen entlang der ersten Fluidleitung verlegt, um die erste Fluidleitung bis zur ersten Fluidleitungsschnittstelle des ersten Kupplungsteils zu beheizen. Vorzugsweise ist der erste Leiter des ersten Kupplungsteils zumindest teilweise zumindest um die erste Fluidleitungsschnittstelle des ersten Kupplungsteils gewickelt. Sofern der Fluidleitungsteiler innerhalb des ersten Kupplungsteils angeordnet ist, ist der erste Leiter vorzugsweise auch zumindest teilweise um den Fluidleitungsteiler gewickelt.

Der erste elektrische Leiter des zweiten Kupplungsteils ist vorzugsweise als Heizleiter in Windungen zumindest um die erste Fluidleitung des zweiten Kupplungsteils verlegt, um zumindest die erste Fluidleitung des zweiten Kupplungsteils zu beheizen. Vorzugsweise ist der erste Leiter des zweiten Kupplungsteils zumindest teilweise zumindest um die erste Fluidleitungsschnittstelle des zweiten Kupplungsteils gewickelt. Sofern der Fluidleitungsteiler innerhalb des zweiten Kupplungsteils angeordnet ist, ist der erste Leiter vorzugsweise auch zumindest teilweise um den Fluidleitungsteiler gewickelt.

Ferner ist vorgesehen, dass die erste Fluidleitungsschnittstelle bzw. die ersten Fluidleitungsschnittstellen und die erste elektrische Schnittstelle bzw. die ersten elektrischen Schnittstellen des ersten Kupplungsteils und des zweiten Kupplungsteils parallel zu einer Steckachse des ersten Kupplungsteils und des zweiten Kupplungsteils ausgerichtet sind. Die Steckachse ist dabei die Achse entlang das erste Kupplungsteil und das zweite Kupplungsteil zum Verbinden zusammengeführt werden. Sofern vorhanden, sind bei einer Ausgestaltung vorzugsweise auch jeweils die zweiten Fluidleitungsschnittstellen bzw. die zweiten elektrischen Schnittstellen parallel zu der Steckachse ausgerichtet.

Die erfindungsgemäße Verbindungsanordnung weist den Vorteil auf, dass mit einem einzigen Steckvorgang gleichzeitig eine elektrische und fluidische Verbindung zwischen dem ersten Kupplungsteil und dem zweiten Kupplungsteil hergestellt wird. Zudem erfolgt eine Aufteilung des in der Fluidleitung geführten Fluidstroms zu mindestens zwei separaten Abnahmestellen mittels des Fluidleitungsteilers.

Gemäß einer ersten Ausgestaltung der Verbindungsanordnung ist vorgesehen, dass die zweite Fluidleitung des zweiten Kupplungsteils mit dem Fluidleitungsteiler verbunden ist, bevorzugt dass die zweite Fluidleitung einen zweiten elektrischen Leiter, insbesondere Heizleiter, aufweist. Vorzugsweise ist der Fluidleitungsteiler im zweiten Kupplungsteil angeordnet und die zweite Fluidleitung des zweiten Kupplungsteils vorzugsweise fluiddicht bzw. einstückig mit dem Fluidleitungsteiler verbunden. Vorzugsweise bildet der Fluidleitungsteiler die erste Fluidleitungsschnittstelle des zweiten Kupplungsteils aus. Ferner bevorzugt ist vorgesehen, dass die zweite Fluidleitung einen zweiten elektrischen Leiter aufweist. Beispielsweise ist der zweite elektrische Leiter als Heizleiter in mindestens einer Windung, vorzugsweise zwei Windungen, um die zweite Fluidleitung angeordnet, so dass die zweite Fluidleitung beheizbar ist. Bei zwei Windungen ist eine Windung hinführend, die andere Windung rückführend um die Fluidleitung gewickelt, so dass der Leiter an einem Ende der Fluidleitung mit zwei elektrischen Polen kontaktierbar ist. Vorzugsweise ist auch der erste elektrische Leiter des zweiten Kupplungsteils derart um die erste Fluidleitung gewickelt, so dass beide elektrischen Leiter mit beiden elektrischen Polen im zweiten Kupplungsteil elektrisch kontaktierbar sind.

Eine weitere Ausgestaltung der Verbindungsanordnung sieht vor, dass das erste Kupplungsteil und das zweite Kupplungsteil jeweils eine zweite Fluidleitungsschnittstelle aufweisen. Vorzugsweise ist dabei der Fluidleitungsteiler in dem ersten Kupplungsteil angeordnet. Die Fluidleitung wird folglich im ersten Kupplungsteil geteilt, so dass jeweils im ersten Kupplungsteil und im zweiten Kupplungsteil eine zweite Fluidleitungsschnittstelle erforderlich ist. Im zweiten Kupplungsteil sind dabei vorzugsweise die erste Fluidleitung und die zweite Fluidleitung unmittelbar mit der ersten Fluidleitungsschnittstelle bzw. der zweiten Fluidleitungsschnittstelle verbunden.

Die ersten Fluidleitungsschnittstellen bzw. die zweiten Fluidleitungsschnittstellen sind vorzugsweise als korrespondierende Paarung aus Stecker und Buchse ausgebildet. Es ist auch vorgesehen, dass Stecker und Buchse jeweils am ersten Kupplungsteil und am zweiten Kupplungsteil bzw. an der ersten Fluidleitungsschnittstelle und der zweiten Fluidleitungsschnittstelle paarweise vertauscht sind, so dass ein Verbinden des ersten Kupplungsteils und des zweiten Kupplungsteils nur in vorbestimmter Ausrichtung erfolgen kann. Sofern der Fluidleitungsteiler einen Teil einer Fluidleitungsschnittstelle bildet, ist dieser bevorzugt als Buchse ausgebildet.

Gemäß einer weiteren Ausgestaltung der Verbindungsanordnung ist vorgesehen, dass das erste Kupplungsteil und das zweite Kupplungsteil jeweils eine zweite elektrische Schnittstelle aufweisen. Die zweite elektrische Schnittstelle wird insbesondere zeitgleich mit den vorhandenen Fluidleitungsschnittstellen und der ersten elektrischen Schnittstelle kontaktiert, wenn das erste Kupplungsteil und das zweite Kupplungsteil zusammengesteckt werden. Die zweite elektrische Schnittstelle dient -je nach Ausgestaltung - beispielsweise der Kontaktierung eines zweiten Pols - während die erste elektrische Schnittstelle einen ersten Pol kontaktiert - oder der Kontaktierung eines elektrischen Leiters mit erstem und zweitem Pol.

Eine weitere Ausgestaltung der Verbindungsanordnung sieht vor, dass die erste elektrische Schnittstelle und/oder die zweite elektrische Schnittstelle des ersten Kupplungsteils und/oder des zweiten Kupplungsteils mindestens einen ersten Kontakt aufweist, insbesondere beide elektrische Schnittstellen jeweils mindestens einen ersten Kontakt und mindestens einen zweiten Kontakt aufweisen. Je nach Ausgestaltung des ersten Kupplungsteils und des zweiten Kupplungsteils sind die erste elektrische Schnittstelle und die zweite elektrische Schnittstelle mit nur einem Kontakt zur Kontaktierung eines Pols oder mit zwei Kontakten zur Kontaktierung von je zwei Polen ausgestaltet. Die konkrete Ausgestaltung ist abhängig von der Art und Verschaltung der elektrischen Leiter, die die Fluidleitungen zumindest teilweise umgeben.

Die elektrischen Leiter, insbesondere Heizleiter, der ersten Fluidleitung und der zweiten Fluidleitung des zweiten Kupplungsteils sind vorzugweise in Reihe oder parallel geschaltet. Je nach Verschaltung der elektrischen Leiter kann sich aber auch eine kombinierte Reihen-Parallelschaltung einzelner Abschnitte ergeben. Es wird ausdrücklich betont, dass alle Schaltungs- und Einspeisungsvarianten im Bereich der Erfindung liegen.

Insbesondere der erforderliche Bauraum der Verbindungsanordnung lässt sich gemäß einer weiteren Ausgestaltung dadurch verringern, dass vorgesehen ist, dass die Mittelachsen der ersten Fluidleitungsschnittstelle und/oder der zweiten Fluidleitungsschnittstelle und/oder der ersten elektrischen Schnittstelle und/oder der zweiten elektrischen Schnittstelle des ersten Kupplungsteils und/oder des zweiten Kupplungsteils, insbesondere im zusammengeführten Zustand des ersten Kupplungsteils und des zweiten Kupplungsteils, in einer gemeinsamen Ebene angeordnet sind. Vorzugsweise sind alle vier Schnittstellen in einer gemeinsamen Ebene angeordnet. Dadurch kann gewährleistet werden, dass die Verbindungsanordnung beispielsweise möglichst flachbauend ist.

Insbesondere die Montageaufwand lässt sich gemäß einer weiteren Ausgestaltung der Verbindungsanordnung dadurch reduzieren, dass der elektrische Leiter des zweiten Kupplungsteils, als Heizleiter, zumindest teilweise entlang der ersten Fluidleitung des zweiten Kupplungsteils geführt ist, insbesondere in zwei Windungen, vorzugsweise ausgehend von dem Gehäuse des zweiten Kupplungsteils, einer hinlaufenden und einer rücklaufenden Windung, so dass der erste elektrische Leiter des zweiten Kupplungsteils an einem ersten Ende der Fluidleitung, innerhalb des zweiten Kupplungsteils, mit beiden Enden bzw. Polen kontaktierbar ist. Ferner ist ein zweiter elektrischer Leiter des zweiten Kupplungsteils vorgesehen, der zumindest teilweise entlang der zweiten Fluidleitung des zweiten Kupplungsteils geführt ist und vorzugsweise ebenfalls in zwei Windungen, nämlich einer hinlaufenden und einer rücklaufenden Windung an der Fluidleitung geführt ist, so dass auch der zweite Leiter an einem ersten Ende der ersten Fluidleitung mit beiden Enden, innerhalb des zweiten Kupplungsteils, kontaktierbar ist.

Der erste elektrische Leiter und der zweite elektrische Leiter sind beispielsweise über eine mit einem ersten Kontakt und einem zweiten Kontakt ausgebildete erste elektrische Schnittstelle des zweiten Kupplungsteils kontaktierbar. Der erste und der zweite elektrische Leiter sind vorzugsweise in Reihe geschaltet, nämlich derart, dass der erste elektrische Leiter in einer ersten, hinlaufenden Windung entlang der ersten Fluidleitung geführt ist, in einer zweiten, rücklaufenden Windung entlang der ersten Fluidleitung zurück zum zweiten Kupplungsteil geführt ist, dort mit dem zweiten Leiter kontaktiert ist, der von dort aus in einer ersten, hinlaufenden Windung entlang der zweiten Fluidleitung und in einer zweiten, rücklaufenden Windung entlang der zweiten Fluidleitung zurück zum zweiten Kupplungsteil geführt und dort mit dem zweiten Kontakt verbunden ist. Am zweiten Kupplungsteil sind der erste Leiter und der zweite Leiter somit über die erste elektrische Schnittstelle, die mit zwei Kontakten ausgebildet ist, kontaktierbar. Vorzugsweise ist dazu korrespondierend die erste Schnittstelle des ersten Kupplungsteils ausgebildet, so dass über die erste Schnittstelle des ersten Kupplungsteils eine elektrische Einspeisung in das zweite Kupplungsteil erfolgt.

Alternativ dazu ist vorgesehen, dass der erste elektrische Leiter und der zweite elektrische Leiter über eine mit einem ersten Kontakt ausgebildete erste elektrische Schnittstelle des zweiten Kupplungsteils und über eine mit einem ersten Kontakt ausgebildete zweite elektrische Schnittstelle des zweiten Kupplungsteils - mit jeweils einem ersten Pol - kontaktierbar sind. Jede der elektrischen Schnittstellen kontaktiert folglich lediglich einen Pol für den elektrischen Leiter, insbesondere Heizleiter. Der erste Leiter und der zweite Leiter sind dabei in Reihe geschaltet und die Windungen wie bei dem vorbeschriebenen Ausführungsbeispiel jeweils in einer hinlaufenden und in einer rücklaufenden Windung entlang der Fluidleitung geführt. Dabei ist die hinlaufende Windung des ersten Leiters mit der ersten elektrischen Schnittstelle und die rücklaufende Windung des zweiten Leiters mit der zweiten elektrischen Schnittstelle kontaktiert. Das erste Kupplungsteil ist korrespondierend mit zwei elektrischen Schnittstellen zur Kontaktierung von jeweils einem Pol ausgebildet.

Ferner ist alternativ vorgesehen, dass der erste Leiter über eine mit einem ersten Kontakt und einem zweiten Kontakt ausgebildete erste elektrische Schnittstelle des zweiten Kupplungsteils und der zweite Leiter über eine mit einem ersten Kontakt und einem zweiten Kontakt ausgebildete zweite elektrische Schnittstelle des zweiten Kupplungsteils kontaktierbar ist. Dabei sind der erste Leiter und der zweite Leiter jedenfalls im zweiten Kupplungsteil parallel zueinander verschaltet und unabhängig zueinander geführt. Gleichwohl sind sie zeitgleich über die erste elektrische Schnittstelle und die zweite elektrische Schnittstelle kontaktierbar. Beispielsweise ist dabei vorgesehen, dass mindestens ein Kontakt der ersten elektrischen Schnittstelle des ersten Kupplungsteils und der zweiten elektrischen Schnittstelle des ersten Kupplungsteils in dem ersten Kupplungsteil miteinander verbunden sind. Dadurch werden der erste Leiter und der zweite Leiter beim Verbinden des ersten Kupplungsteils und des zweiten Kupplungsteils in Reihe geschaltet. Am dem jeweils zweiten Kontakt der elektrischen Schnittstellen des ersten Kupplungsteils sind der erste Pol und der zweite Pol des ersten elektrischen Leiters des ersten Kupplungsteils kontaktiert, über den vorzugsweise die elektrische Einspeisung erfolgt.

Gemäß einer weiteren Ausgestaltung der Verbindungsanordnung ist vorgesehen, dass die erste elektrische Schnittstelle des ersten Kupplungsteils mindestens einen ersten elektrischen Kontakt und mindestens einen zweiten elektrischen Kontakt aufweist, dass die zweite elektrische Schnittstelle des ersten Kupplungsteils mindestens einen ersten elektrischen Kontakt und mindestens einen zweiten elektrischen Kontakt aufweist, und dass im ersten Kupplungsteil der erste Kontakt der ersten elektrischen Schnittstelle mit dem ersten Kontakt der zweiten elektrischen Schnittstelle elektrisch verbunden ist. Dadurch wird gewährleistet, dass trotz des Vorhandenseins von zwei nebeneinander vorhandenen elektrischen Schnittstellen die Möglichkeit besteht, den ersten Leiter des zweiten Kupplungsteils und den zweiten Leiter des zweiten Kupplungsteils, obwohl beide im zweiten Kupplungsteil parallel geschaltet sind, elektrisch in Reihe zu schalten, nämlich dadurch, dass die Kontakte zwischen der ersten elektrischen Schnittstelle und der zweiten elektrischen Schnittstelle im ersten Kupplungsteil miteinander verbunden sind.

Der jeweils zweite Kontakt der ersten elektrischen Schnittstelle und der zweiten elektrischen Schnittstelle sind mit jeweils einem Pol des ersten Leiters des ersten Kupplungsteils verbunden, so dass darüber vorzugsweise die Einspeisung erfolgt. Beispielsweise weist das zweite Kupplungsteil korrespondierend dazu eine erste elektrische Schnittstelle mit einem ersten elektrischen Kontakt und einem zweiten elektrischen Kontakt sowie eine zweite elektrische Schnittstelle mit einem ersten elektrischen Kontakt und einem zweiten elektrischen Kontakt auf. Dabei sind die elektrischen Kontakte der ersten elektrischen Schnittstelle und der zweiten elektrischen Schnittstelle des zweiten Kupplungsteils jeweils mit einem elektrischen Leiter, insbesondere einem Heizleiter, an jeweils einer Fluidleitung verbunden.

Die Variabilität der Verbindungsanordnung wird gemäß einer weiteren Ausgestaltung vorzugsweise dadurch gesteigert, dass das zweite Kupplungsteil mindestens zwei Gehäuseteile aufweist, nämlich ein erstes Gehäuseteil mit der ersten Fluidleitung, der ersten Fluidleitungsschnittstelle und der ersten elektrischen Schnittstelle, und ein zweites Gehäuseteil mit der zweiten Fluidleitung, einer zweiten Fluidleitungsschnittstelle und einer zweiten elektrischen Schnittstelle. Das erste Gehäuseteil und das zweite Gehäuseteil bilden gemeinsam das zweite Kupplungsteil. Grundsätzlich ist jedes Gehäuseteil separat mit dem ersten Kupplungsteil verbindbar. Es ist auch vorgesehen, dass der Fluidleitungsteiler im ersten Gehäuseteil oder im zweiten Gehäuseteil des zweiten Kupplungsteils angeordnet ist. Zwischen dem ersten Gehäuseteil und dem zweiten Gehäuseteil ist dann vorzugsweise mindestens eine elektrische Schnittstelle und mindestens eine Fluidleitungsschnittstelle ausgebildet.

Die erste elektrische Schnittstelle des ersten Gehäuseteils und die zweite elektrische Schnittstelle des zweiten Gehäuseteils haben je nach Ausführungsbeispiel entweder jeweils zwei Kontakte oder einen Kontakt.

Insbesondere die Montage der Verbindungsanordnung lässt sich gemäß einer weiteren Ausgestaltung dadurch vereinfachen, dass das erste Gehäuseteil und das zweite Gehäuseteil miteinander formschlüssig, kraftschlüssig oder kraftformschlüssig verbindbar sind, insbesondere miteinander verrastbar, verklemmbar oder verschraubbar sind. Das erste Gehäuseteil und das zweite Gehäuseteil werden beispielsweise vor dem Verbinden mit dem ersten Kupplungsteil miteinander verbunden oder sie werden unabhängig voneinander mit dem ersten Kupplungsteil verbunden und verbinden sich beim Verbinden mit dem ersten Kupplungsteil ebenfalls miteinander.

Gemäß einer weiteren Ausgestaltung der Verbindungsanordnung hat sich als vorteilhaft herausgestellt, wenn vorgesehen ist, dass das erste Gehäuseteil und das zweite Gehäuseteil zusätzlich jeweils eine elektrische Querverbindungsschnittstelle aufweisen, und dass mit der Querverbindungsschnittstelle eine elektrische Verbindung zwischen dem ersten elektrischen Leiter in dem ersten Gehäuseteil und einem zweiten elektrischen Leiter in dem zweiten Gehäuseteil herstellbar ist, so dass der erste elektrische Leiter und der zweite elektrische Leiter in Reihe geschaltet sind. Dieses Ausführungsbeispiel ist insbesondere dann vorteilhaft, wenn die erste elektrische Schnittstelle des zweiten Kupplungsteils und die zweite elektrische Schnittstelle des zweiten Kupplungsteils jeweils nur einen einzigen Kontakt aufweisen, so dass jeweils ein Pol über jeweils eine elektrische Schnittstelle kontaktierbar ist. Die beiden elektrischen Leiter, insbesondere Heizleiter, sind dann dadurch kontaktiert, dass der erste Leiter über die erste elektrische Schnittstelle kontaktiert ist, der erste elektrische Leiter dann in einer hin- und einer rücklaufenden Windung entlang der ersten Fluidleitung des zweiten Kupplungsteils geführt ist, über die Querverbindungsschnittstelle mit dem zweiten Leiter elektrisch verbunden ist, wo der elektrische Leiter über ebenfalls eine hin- und eine rücklaufende Windung entlang der zweiten Fluidleitung angeordnet ist, um dann über die zweite elektrische Schnittstelle des zweiten Kupplungsteils kontaktierbar zu sein. Die Querverbindungsschnittstelle ist beispielsweise als Stecker-Buchse-Kombination ausgebildet.

Gemäß einer weiteren Ausgestaltung der Verbindungsanordnung hat sich ferner als vorteilhaft herausgestellt, wenn vorgesehen ist, dass der Fluidleitungsteiler eine T-Form, eine h-Form oder eine Y-Form aufweist. Diese Formen haben sich bei dem Fluidleiter als vorteilhaft herausgestellt, weil sowohl eine kompakte Bauform als auch eine einfache Herstellbarkeit gewährleistet ist.

Eine weitere vorteilhafte Ausgestaltung der Verbindungsanordnung sieht vor, dass die erste elektrische Schnittstelle des zweiten Kupplungsteils und die zweite elektrische Schnittstelle des zweiten Kupplungsteils auf einer Seite der Fluidleitungsschnittstelle angeordnet sind. Insbesondere sind die erste elektrische Schnittstelle und die zweite elektrische Schnittstelle des zweiten Kupplungsteils und die Fluidleitungsschnittstelle des zweiten Kupplungsteils in einer gemeinsamen, gedachten Ebene angeordnet. Vorzugsweise sind die erste elektrische Schnittstelle des zweiten Kupplungsteils und die zweite elektrische Schnittstelle des zweiten Kupplungsteils auf einer von der zweiten Fluidleitung des zweiten Kupplungsteils abgewandten Seite angeordnet.

Ferner vorzugsweise ist vorgesehen, dass die erste elektrische Schnittstelle des ersten Kupplungsteils und die zweite elektrische Schnittstelle des ersten Kupplungsteils auf einer Seite der Fluidleitungsschnittstelle des ersten Kupplungsteils angeordnet sind. Beispielsweise sind die erste elektrische Schnittstelle und die zweite elektrische Schnittstelle des ersten Kupplungsteils und die Fluidleitungsschnittstelle des ersten Kupplungsteils in einer gemeinsamen Ebene angeordnet.

Die vorstehend beschriebene Ausgestaltung weist insbesondere bei Ausführungsbeispielen mit 90°-Abzweig im zweiten Kupplungsteil den Vorteil auf, dass die Fluidleitungsschnittstelle, insbesondere im zweiten Kupplungsteil, näher an einer Gehäusekante verlagert werden kann, da die elektrische Schnittstelle nicht mehr zwischen dem Abzweig und der Gehäusekante angeordnet ist. Das zweite Kupplungsteil kann dadurch kompakter konstruiert werden.

Die eingangs genannte Aufgabe ist ferner durch ein Kupplungsteil gemäß Anspruch 15 gelöst.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Verbindungsanordnung in teilweise freigestellter Seitenansicht,
- Fig. 2: ein Ausführungsbeispiel einer Verbindungsanordnung in teilweise freigestellter Seitenansicht,
- Fig. 3: ein Ausführungsbeispiel einer Verbindungsanordnung in teilweise freigestellter Seitenansicht,
- Fig. 4: ein Ausführungsbeispiel einer Verbindungsanordnung in teilweise freigestellter Seitenansicht,
- Fig. 5: ein Ausführungsbeispiel einer Verbindungsanordnung in teilweise freigestellter Seitenansicht,
- Fig. 6: ein Ausführungsbeispiel einer Verbindungsanordnung in teilweise freigestellter Seitenansicht,
- Fig. 7: ein Ausführungsbeispiel einer elektrischen Verschaltung,
- Fig. 8: ein weiteres Ausführungsbeispiel einer elektrischen Verschaltung,
- Fig. 9: ein weiteres Ausführungsbeispiel einer elektrischen Verschaltung,
- Fig. 10: ein weiteres Ausführungsbeispiel einer elektrischen Verschaltung, und
- Fig. 11: ein Ausführungsbeispiel einer Verbindungsanordnung in teilweise freigestellter Seitenansicht.

In den verschiedenen Figuren der Zeichnung sind gleiche Teile stets mit denselben Bezugszeichen versehen.

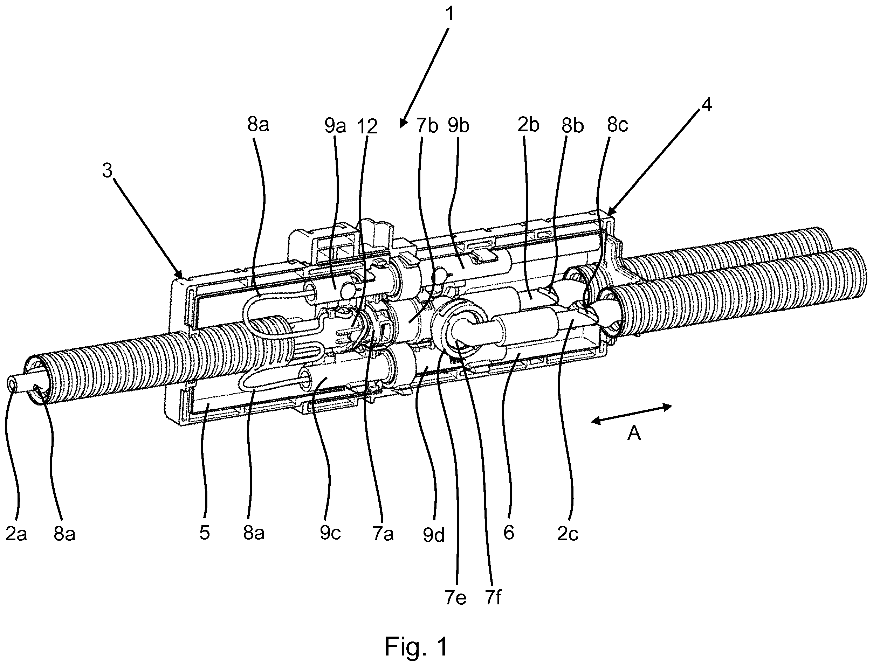

Fig. 1, Fig. 2, Fig. 3 und Fig. 11 zeigen ein jeweils Ausführungsbeispiel einer Verbindungsanordnung 1 für beheizbare Fluidleitungen 2a, 2b, 2c, mit einem ersten Kupplungsteil 3 und einem zweiten Kupplungsteil 4 in teilweise freigestellter Seitenansicht. Das erste Kupplungsteil 3 und das zweite Kupplungsteil 4 weisen jeweils ein Gehäuse 5, 6 auf. Das erste Kupplungsteil 3 und das zweite Kupplungsteil 4 sind miteinander verbindbar, indem das erste Kupplungsteil 3 und das zweite Kupplungsteil 4 parallel zu einer Steckachse A aufeinander zu bewegt werden und formschlüssig verrasten. Fig. 1, Fig. 2, Fig. 3 und Fig. 11 zeigen das erste Kupplungsteil 3 und das zweite Kupplungsteil 4 in verbundenem Zustand. Das erste Kupplungsteil 3 und das zweite Kupplungsteil 4 weisen jeweils eine erste Fluidleitung 2a, 2b, mindestens eine erste Fluidleitungsschnittstelle 7a, 7b, mindestens einen ersten elektrischen Leiter 8a, 8b und mindestens eine erste elektrische Schnittstelle 9a, 9b auf. Das zweite Kupplungsteil 4 weist ferner eine zweite Fluidleitung 2c auf, die von einem zweiten elektrischen Leiter 8c des zweiten Kupplungsteils 4 umgeben ist.

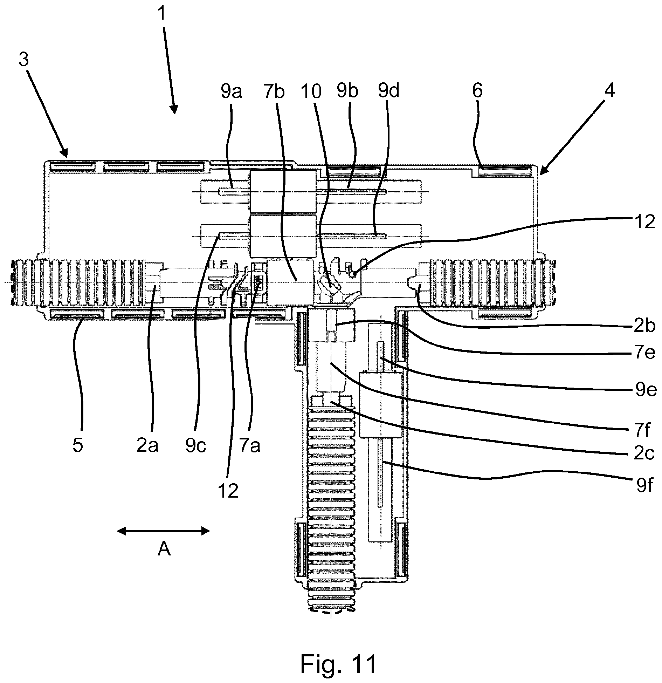

Aus Gründen der Übersichtlichkeit ist der tatsächliche Verlauf der elektrischen Leiter 8a, 8b, 8b zumindest teilweise ausgeblendet bzw. nicht dargestellt. In Fig. 11 sind die elektrischen Leiter 8a, 8b, 8c nicht dargestellt.

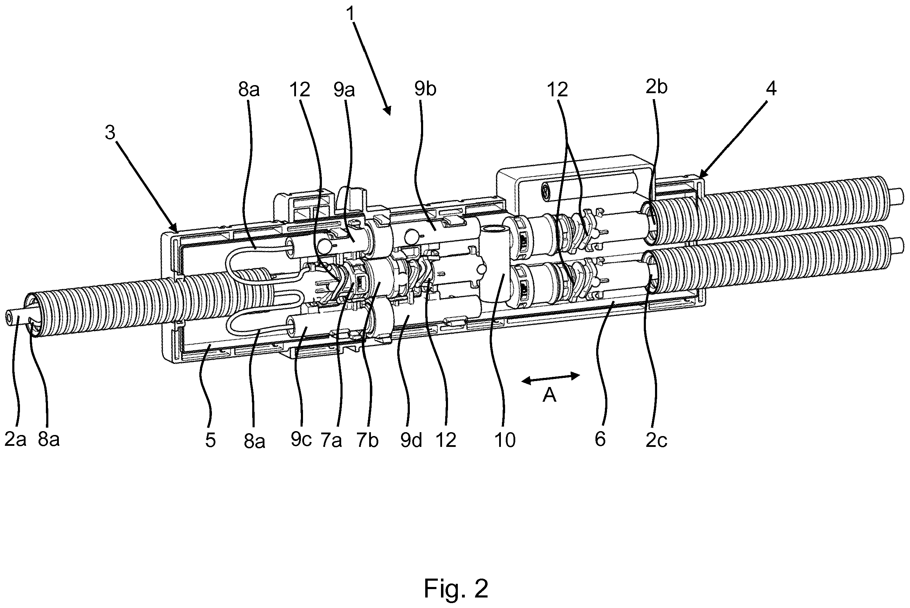

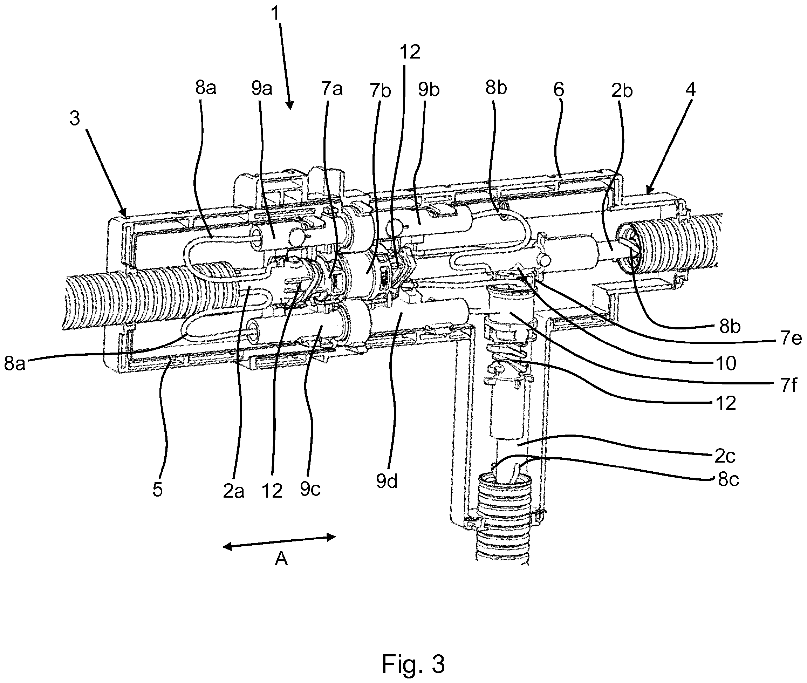

Bei den in den Fig. 1, Fig. 2, Fig. 3 und Fig. 11 dargestellten Ausführungsbeispielen weist das zweite Kupplungsteil 4 einen Fluidleitungsteiler 10 zum Aufteilen eines Fluidstroms auf. Gemäß Fig. 1 ist der Fluidleitungsteiler 10 T-förmig ausgebildet. Gemäß Fig. 2 ist der Fluidleitungsteiler 10 h-förmig oder gabelförmig und gemäß Fig. 3 ebenfalls T-förmig, jedoch im Vergleich zu Fig. 1 mit einer zentral angeordneten Zuleitung und unterschiedlicher rotativer Ausrichtung. Gemäß Fig. 11 ist der Fluidleitungsteiler 10 ebenfalls T-förmig ausgebildet. Der Fluidleitungsteiler 10 ist bei diesen Ausführungsbeispielen sowohl mit der ersten Fluidleitung 2b des zweiten Kupplungsteils 4 als auch mit der zweiten Fluidleitung 2c des zweiten Kupplungsteils 4 verbunden. Der Fluidleitungsteiler 10 bildet bei diesen Ausführungsbeispielen auch einen Teil der ersten Fluidleitungsschnittstelle 7b.

Bei dem Ausführungsbeispiel gemäß Fig. 2 ist der Fluidleitungsteiler 10 so gestaltet, dass er vollständig in einer gemeinsamen Ebene mit den ersten elektrischen Schnittstellen 9a, 9b und den Fluidleitungen 2a, 2b, 2c liegt.

Bei dem Ausführungsbeispiel gemäß Fig. 3 und Fig. 11 ist der Fluidleitungsteiler 10 so ausgebildet, dass die erste Fluidleitung 2b des zweiten Kupplungsteils 4 und die zweite Fluidleitung 2c des zweiten Kupplungsteils 4 in einem Winkel von etwa 90° zueinander angeordnet sind.

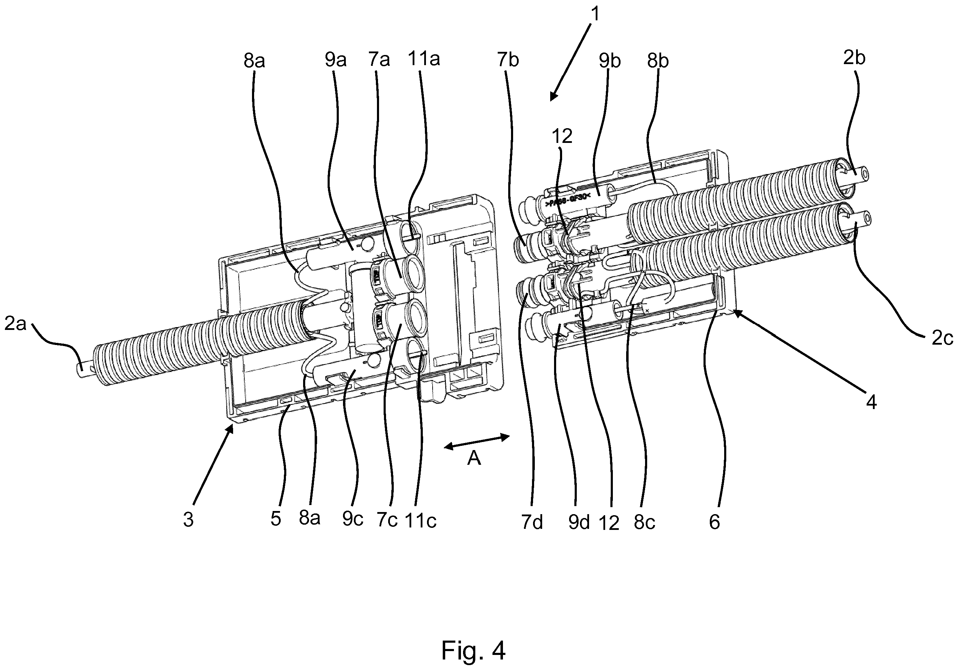

Fig. 4 zeigt ein Ausführungsbeispiel einer Verbindungsanordnung 1 mit einem ersten Kupplungsteil 3 und einem zweiten Kupplungsteil 4. Jedes Kupplungsteil 3, 4 weist ein Gehäuse 5, 6 auf. Bei diesem Ausführungsbeispiel ist der Fluidleitungsteiler 10 im Wesentlichen gabelförmig oder h-förmig mit einem mittigen Anschluss der ersten Fluidleitung 2a ausgebildet und im ersten Kupplungsteil 3 angeordnet. Der Fluidleitungsteiler 10 bildet hier auch die erste Fluidleitungsschnittstelle 7a sowie eine zweite Fluidleitungsschnittstelle 7c des ersten Kupplungsteils 3. Auch das zweite Kupplungsteil 4 weist eine erste Fluidleitungsschnittstelle 7b und eine zweite Fluidleitungsschnittstelle 7d auf, die jeweils unmittelbar mit der ersten Fluidleitung 2b bzw. mit der zweiten Fluidleitung 2c fest verbunden sind.

Sowohl die Ausführungsbeispiele der Fig. 1 bis 3 und Fig. 11 als auch das Ausführungsbeispiel der Fig. 4 weisen zusätzlich zu der ersten elektrischen Schnittstelle 9a, 9b jeweils eine zweite elektrische Schnittstelle 9c, 9d am ersten Kupplungsteil 3 und am zweiten Kupplungsteil 4 auf. Jede der elektrischen Schnittstellen 9a, 9b, 9c, 9d weist bei den Ausführungsbeispielen der Fig. 1 bis 4 und Fig. 11 einen Kontakt 11a, 11b auf, so dass jeweils ein Pol kontaktierbar ist.

Gemäß dem Ausführungsbeispiel der Fig. 11 ist ferner vorgesehen, dass die elektrischen Schnittstellen 9b, 9d des zweiten Kupplungsteils 4 auf einer Seite der Fluidleitungsschnittstelle 7b, vorzugsweise in einer Ebene, angeordnet sind, insbesondere auf der der zweiten Fluidleitung 2c des zweiten Kupplungsteils 4 abgewandten Seite angeordnet sind. Insbesondere sind auch die elektrischen Schnittstellen 9a, 9c des ersten Kupplungsteils 3 auf einer Seite der Fluidleitungsschnittstelle 7a angeordnet, insbesondere auf der im montierten Zustand von der zweiten Fluidleitung 2c des zweiten Kupplungsteils 4 abgewandten Seite. Dadurch kann das zweite Kupplungsteil 4 kompakter gebaut werden, da die Fluidleitungsschnittstelle 7b näher an die Außenkante des Gehäuses 6 gerückt werden kann, da die elektrische Schnittstelle 9d nicht - wie beispielsweise bei Fig. 3 - dazwischen angeordnet ist.

Bei den Ausführungsbeispielen der Fig. 1 bis 4 und Fig. 11 sind der erste elektrische Leiter 8b des zweiten Kupplungsteils 4 und der zweite elektrische Leiter 8c des zweiten Kupplungsteils 4 in Reihe geschaltet. Die elektrische Einspeisung (eines Pols) erfolgt über den ersten Leiter 8a des ersten Kupplungsteils 3, nämlich über die erste elektrische Schnittstelle 9a und den dort befindlichen ersten Kontakt 11a (siehe Fig. 4) sowie die erste elektrische Schnittstelle 9b des zweiten Kupplungsteils 4, worauf folgend der erste elektrische Leiter 8b des zweiten Kupplungsteils 4 in einer hinlaufenden und einer rücklaufenden Windung um die erste Fluidleitung 2b des zweiten Kupplungsteils 4 gelegt ist, um dann - ausgehend von der rückführenden Windung - mit einer hinführenden Windung des zweiten Leiters 8c kontaktiert zu sein, der entlang der zweiten Fluidleitung 2c in zwei Windungen hin- und zurückgeführt ist, um dann über die zweite elektrische Schnittstelle 9d des zweiten Kupplungsteils 4 und den ersten Kontakt 11b (siehe Fig. 4) der zweiten elektrischen Schnittstelle 9c des ersten Kupplungsteils 3 mit der zweiten Windung des ersten Leiters 8a des ersten Kupplungsteils 3 kontaktiert zu sein.

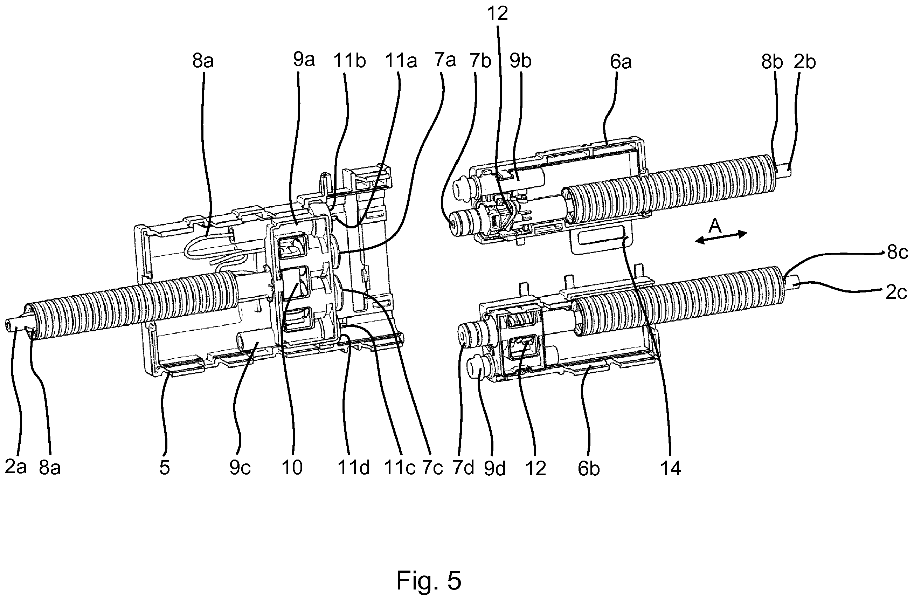

Fig. 5 zeigt ein Ausführungsbeispiel einer Verbindungsanordnung 1 mit einem ersten Kupplungsteil 3 mit einem Gehäuse 5 und einem zweiten Kupplungsteil 4, das zwei separate Gehäuseteile 6a, 6b, die miteinander verbindbar sind, aufweist. Das erste Gehäuseteil 6a des zweiten Kupplungsteils 4 beinhaltet die erste Fluidleitung 2b, den ersten elektrischen Leiter 8b, die erste Fluidleitungsschnittstelle 7b sowie die erste elektrische Schnittstelle 9b. Das zweite Gehäuseteil 6b beinhaltet die zweite Fluidleitung 2c, den zweiten elektrischen Leiter 8c sowie die zweite Fluidleitungsschnittstelle 7d und die zweite elektrische Schnittstelle 9d.

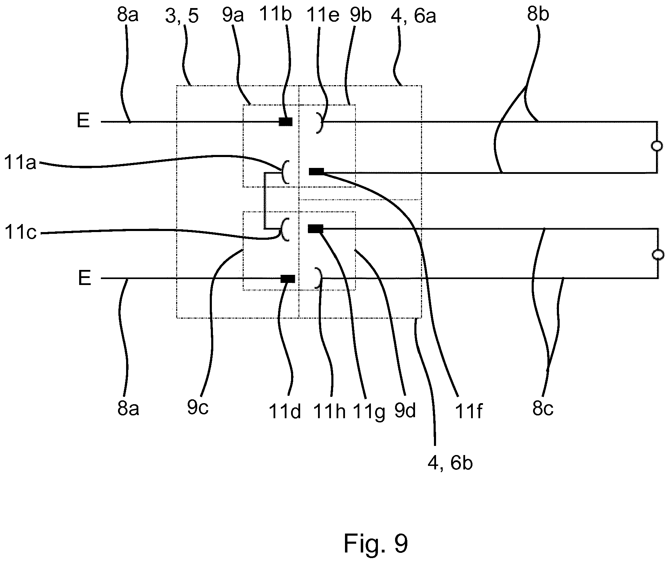

Das erste Kupplungsteil 3 umfasst bei diesem Ausführungsbeispiel gemäß Fig. 5 den Fluidleitungsteiler 10 mit der ersten Fluidleitungsschnittstelle 7a und der zweiten Fluidleitungsschnittstelle 7c. Die erste elektrischen Schnittstellen 9a des ersten Kupplungsteils 3 weist einen ersten elektrischen Kontakt 11a und einen zweiten elektrischen Kontakt 11b auf. Die zweite elektrische Schnittstelle 9c des ersten Kupplungsteils 3 weist ebenfalls einen ersten elektrischen Kontakt 11c und einen zweiten elektrischen Kontakt 11d. Die erste elektrische Schnittstelle 9b und die zweite elektrische Schnittstelle 9d des zweiten Kupplungsteils 4 weisen ebenfalls jeweils zwei Kontakte 11e, 11f, 11g, 11h (beispielhaft nur gezeigt in Fig. 9) auf. Die elektrische Verschaltung des Ausführungsbeispiels der Fig. 5 ist beispielhaft in Fig. 9 gezeigt.

Da bei diesem Ausführungsbeispiel die ersten elektrischen Schnittstellen 9a, 9b und zweiten elektrischen Schnittstellen 9c, 9d jeweils zwei Kontakte 11a bis 11h (siehe Fig. 9) aufweisen, ist der erste elektrische Leiter 8b des ersten Gehäuseteils 6a des zweiten Kupplungsteils 4 ausschließlich über die erste elektrische Schnittstelle 9b des zweiten Kupplungsteils 4 bzw. die erste elektrische Schnittstelle 9a des ersten Kupplungsteils 3 kontaktiert. Gleichermaßen ist der zweite elektrische Leiter 8c des zweiten Gehäuseteils 6b des zweiten Kupplungsteils 4 ausschließlich über die zweite elektrische Schnittstelle 9d des zweiten Kupplungsteils 4 bzw. die zweite elektrische Schnittstelle 9c des ersten Kupplungsteils 3 kontaktiert. Im ersten Kupplungsteil 3 sind der erste Kontakt 11a sowie der erste Kontakt 11c der zweiten elektrischen Schnittstelle 9c elektrisch miteinander verbunden, so dass der erste Leiter 8b und der zweite Leiter 8c des zweiten Kupplungsteils 4 im zweiten Kupplungsteil zwar parallel geschaltet sind, nach der Kontaktierung, also dem Verbinden des ersten Kupplungsteils 3 mit dem zweiten Kupplungsteil 4, der erste elektrische Leiter 8b des zweiten Kupplungsteils 4 und der zweite elektrische Leiter 8c des zweiten Kupplungsteils 4 jedoch in Reihe geschaltet sind.

Bei den Ausführungsbeispielen der Fig. 1 bis 5 und Fig. 11 sind zumindest teilweise an den Fluidleitungen 2a, 2b, 2c bzw. an den Fluidleitungsschnittstellen 7a, 7b, 7c, 7d oder an den Fluidleitungsteilern 10 Wickelbereiche 12 vorgesehen, in denen einer der relevanten elektrischen Leiter 8a, 8b, 8c umwickelt wird, um eine Beheizung der entsprechenden Abschnitte zu realisieren (aus Gründen der Übersicht nicht dargestellt).

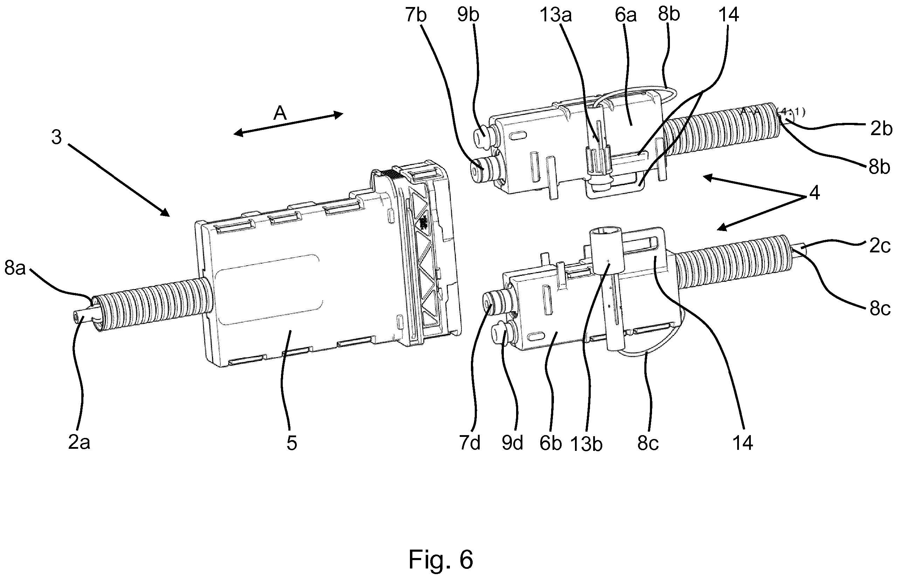

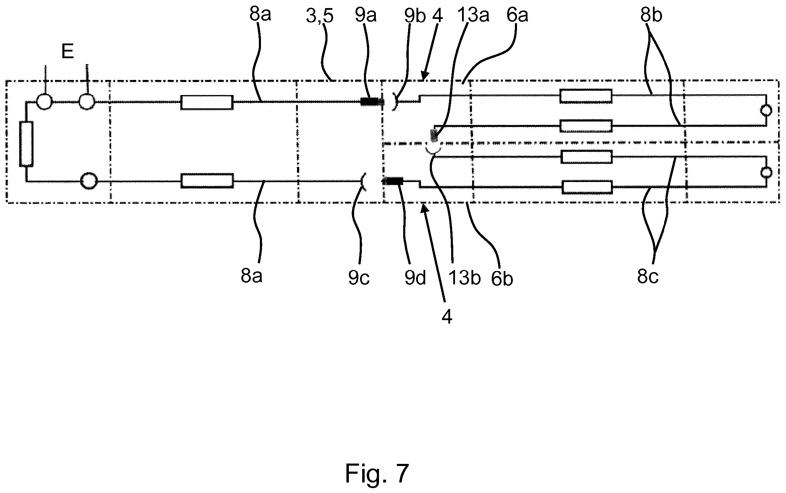

Fig. 6 zeigt ein Ausführungsbeispiel einer Verbindungsanordnung 1, bei der das erste Kupplungsteil 3 wie bei dem Ausführungsbeispiel gemäß Fig. 4 ausgebildet ist. Das zweite Kupplungsteil 4 ist bei diesem Ausführungsbeispiel wiederum mit einem ersten Gehäuseteil 6a und einem zweiten Gehäuseteil 6b ausgebildet. Jedes Gehäuseteil 6a, 6b weist eine elektrische Querverbindungsschnittstelle 13a, 13b auf, die als Buchse-Stecker-Kombination miteinander verbindbar sind, um den ersten elektrischen Leiter 8b des zweiten Kupplungsteils 4 mit dem zweiten elektrischen Leiter 8c des zweiten Kupplungsteils 4 in Reihe zu schalten. Die elektrische Verschaltung dieses Ausführungsbeispiels ist beispielhaft in Fig. 7 dargestellt und entspricht - mit Ausnahme des Querverbinders 13a, 13b - den Ausführungsbeispielen der Fig. 1 bis 4, insbesondere in Bezug auf die hin- und rücklaufenden Windungen des ersten Leiters 8b und des zweiten Leiters 8c des zweiten Kupplungsteils 4. Die erste elektrische Schnittstelle 9b des zweiten Kupplungsteils 4 und die zweite elektrische Schnittstelle 9d des zweiten Kupplungsteils 4 weisen - wie bei dem Ausführungsbeispiel gemäß den Figuren 1 bis 4 - jeweils nur einen einzigen Kontakt auf. Das erste Gehäuseteil 6a und das zweite Gehäuseteil 6b weisen Rastelemente 14 auf, so dass das erste Gehäuseteil 6a und das zweite Gehäuseteil 6b formschlüssig miteinander verbindbar sind.

Fig. 7 zeigt ein Ausführungsbeispiel einer elektrischen Verschaltung gemäß dem Ausführungsbeispiel der Fig. 6. Ausgehend von der Einspeisung E, beispielsweise dem Bordnetz eines Kraftfahrzeuges, ist der erste elektrische Leiter 8a des ersten Kupplungsteils 3 in einer hinführenden Windung und in einer rückführenden Windung mit der ersten elektrischen Schnittstelle 9a und der zweiten elektrischen Schnittstelle 9b des ersten Kupplungsteils 3 verbunden. Der erste elektrische Leiter 8b des zweiten Kupplungsteils 4 ist ebenfalls in einer hinführenden und rückführenden Windung verlegt, wobei die hinführende Windung mit der ersten elektrischen Schnittstelle 9b des zweiten Kupplungsteils 4 und die rückführende Windung mit der Querverbindungsschnittstelle 13a kontaktiert ist. Gleichermaßen ist die hinführende Windung des zweiten elektrischen Leiters 8c mit der Querverbindungsschnittstelle 13b verbunden und die rückführende Windung des zweiten elektrischen Leiters 8c des zweiten Kupplungsteils 4 mit der zweiten elektrischen Schnittstelle 9d.

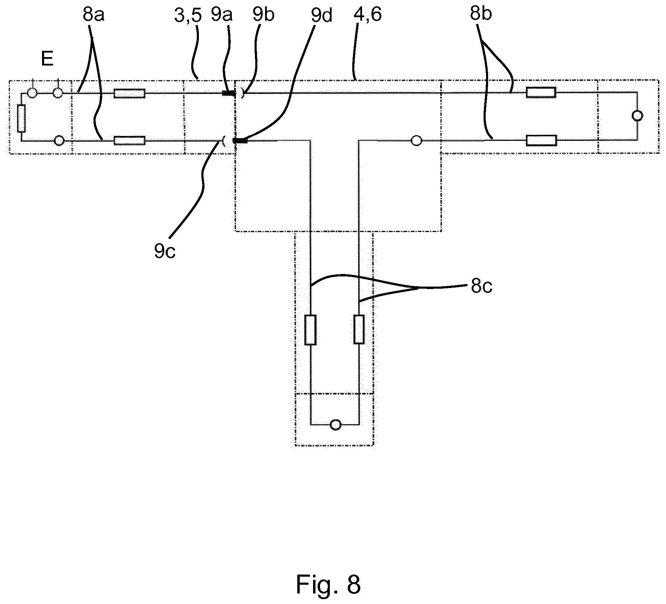

Fig. 8 zeigt ein Ausführungsbeispiel einer elektrischen Verschaltung gemäß den Ausführungsbeispielen der Fig. 1 bis Fig. 4 und Fig. 11. Ausgehend von der Einspeisung E, beispielsweise dem Bordnetz eines Kraftfahrzeuges, ist der erste elektrische Leiter 8a des ersten Kupplungsteils 3 in einer hinführenden Windung und einer rückführenden Windung zwischen der ersten elektrischen Schnittstelle 9a und der zweiten elektrischen Schnittstelle 9c des ersten Kupplungsteils 3 ausgebildet. Der erste elektrische Leiter 8b des zweiten Kupplungsteils 4 ist in seiner hinführenden Windung mit der ersten elektrischen Schnittstelle 9b und an seiner rückführenden Windung mit der hinführenden Windung des zweiten elektrischen Leiters 8c unmittelbar verbunden, wobei die rückführende Windung des zweiten Leiters 8c mit der zweiten elektrischen Schnittstelle 9d des zweiten Kupplungsteils 4 verbunden ist. Jede der elektrischen Schnittstellen 9a, 9b, 9c, 9d weist nur einen einzigen Kontakt zur Kontaktierung eines Pols auf.

Fig. 9 zeigt ein Ausführungsbeispiel einer elektrischen Verschaltung gemäß dem Ausführungsbeispiel der Fig. 5. Der erste elektrische Leiter 8a des ersten Kupplungsteils 3 speist den zweiten Kontakt 11b der ersten elektrischen Schnittstelle 9a des ersten Kupplungsteils 3. Die hinlaufende und die rücklaufende Windung des ersten elektrischen Leiters 8b des zweiten Kupplungsteils 4 sind über die zweite elektrische Schnittstelle 9b mit einem ersten Kontakt 11e und einem zweiten Kontakt 11f verbunden. Der zweite elektrische Leiter 8c des zweiten Kupplungsteils 4 bzw. dessen hin- und rücklaufende Windungen sind mit einem ersten Kontakt 11g und einem zweiten Kontakt 11h in der zweiten elektrischen Schnittstelle 9d verbunden. Der erste elektrische Kontakt 11a der ersten elektrischen Schnittstelle 9a des ersten Kupplungsteils 3 ist innerhalb des ersten Kupplungsteils 3 elektrisch mit dem ersten Kontakt 11c der zweiten elektrischen Schnittstelle 9c des ersten Kupplungsteils 3 elektrisch verbunden, so dass im kontaktierten Zustand der erste elektrische Leiter 8b des zweiten Kupplungsteils 4 und der zweite elektrische Leiter 8c des zweiten Kupplungsteils 4 elektrisch in Reihe geschaltet sind.

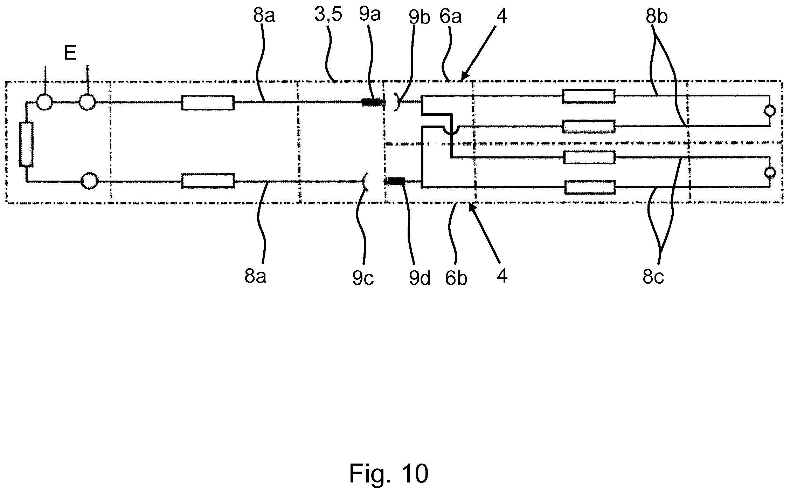

Fig. 10 zeigt ein Ausführungsbeispiel einer elektrischen Verschaltung. Ausgehend von der Einspeisung E, beispielsweise dem Bordnetz eines Kraftfahrzeuges, ist der erste elektrische Leiter 8a des ersten Kupplungsteils 3 in einer hinführenden Windung und in einer rückführenden Windung mit der ersten elektrischen Schnittstelle 9a und der zweiten elektrischen Schnittstelle 9b des ersten Kupplungsteils 3 verbunden. Der erste elektrische Leiter 8b des zweiten Kupplungsteils 4 ist ebenfalls in einer hinführenden und rückführenden Windung verlegt, wobei die hinführende Windung mit der ersten elektrischen Schnittstelle 9b des zweiten Kupplungsteils 4 verbunden ist und mit einer hinführenden Windung des zweiten elektrischen Leiters 8c des zweiten Kupplungsteils 4 parallel geschaltet ist.

Die rückführende Windung des zweiten elektrischen Leiters 8c des zweiten Kupplungsteils 4 ist mit der rückführenden Windung des ersten elektrischen Leiters 8b parallel geschaltet und mit der zweiten elektrischen Schnittstelle 9d verbunden. Das zweite Kupplungsteil 4 weist ein erstes Gehäuseteil 6a und ein zweites Gehäuseteil 6b auf.

Insbesondere gemäß den Ausführungsbeispielen der Fig. 1, Fig. 3 und Fig. 11 ist die zweite Fluidleitung 2c des zweiten Kupplungselements 4 über eine weitere Fluidleitungsschnittstelle 7e, 7f an den Fluidleitungsteiler 10 angebunden.

Ferner ist insbesondere gemäß dem Ausführungsbeispiel der Fig. 11 eine weitere elektrische Schnittstelle 9e, 9f am zweiten Kupplungsteil 4 zum Anschluss des - in Fig. 11 nicht dargestellten - elektrischen Leiters 8c vorgesehen.

### Bezugszeichenliste

- 1: Verbindungsanordnung
- 2a, b, c: Fluidleitungen
- 3: Erstes Kupplungsteil
- 4: Zweites Kupplungsteil
- 5: Gehäuse
- 6: Gehäuse
- 6a, b: Gehäuseteile
- 7a, b, c, d, e, f: Fluidleitungsschnittstellen
- 8a, b, c: Elektrische Leiter
- 9a, b, c, d, e, f: Elektrische Schnittstellen
- 10: Fluidleitungsteiler
- 11a,b,c,d,e,f,g,h: Kontakte in 9a, 9b, 9c oder 9d
- 12: Wickelbereiche
- 13a, 13b: Querverbindungsschnittstelle
- 14: Rastelemente
- E: Einspeisung
- A: Steckachse

## Patentansprüche

1. Verbindungsanordnung (1) zum Verbinden von beheizbaren Fluidleitungen (2a,2b,2c), mit mindestens einem ersten Kupplungsteil (3) und mindestens einem zweiten Kupplungsteil (4), wobei das erste Kupplungsteil (3) und das zweite Kupplungsteil (4) miteinander verbindbar sind, wobei das erste Kupplungsteil (3) und das zweite Kupplungsteil (4) jeweils mindestens eine erste Fluidleitung (2a,2b), mindestens eine erste Fluidleitungsschnittstelle (7a,7b), mindestens einen ersten elektrischen Leiter (8a,8b) und mindestens eine erste elektrische Schnittstelle (9a,9b) aufweisen, und wobei die ersten Fluidleitungsschnittstellen (7a,7b) und die ersten elektrischen Schnittstellen (9a,9b) parallel zu einer Steckachse des ersten Kupplungsteils (3) und des zweiten Kupplungsteils (4) ausgerichtet sind,
**dadurch gekennzeichnet, dass**
das erste Kupplungsteil (3) und/oder das zweite Kupplungsteil (4) mindestens einen Fluidleitungsteiler (10) aufweist, und dass das zweite Kupplungsteil (4) mindestens eine zweite Fluidleitung (2c) aufweist.

2. Verbindungsanordnung (1) nach Anspruch 1,
**dadurch gekennzeichnet, dass**
die zweite Fluidleitung (2c) des zweiten Kupplungsteils (4) mit dem Fluidleitungsteiler (10) verbunden ist, bevorzugt dass das zweite Kupplungsteil (4) einen zweiten elektrischen Leiter (8c) aufweist.

3. Verbindungsanordnung (1) nach Anspruch 1 oder 2,
**dadurch gekennzeichnet, dass**
das erste Kupplungsteil (3) und das zweite Kupplungsteil (4) eine zweite Fluidleitungsschnittstelle (7c,7d) aufweisen.

4. Verbindungsanordnung (1) nach einem der vorhergehenden Ansprüche, **dadurch gekennzeichnet, dass**
das erste Kupplungsteil (3) und das zweite Kupplungsteil (4) jeweils eine zweite elektrische Schnittstelle (9c,9d) aufweisen.

5. Verbindungsanordnung (1) nach einem der vorhergehenden Ansprüche,
**dadurch gekennzeichnet, dass**
die erste elektrische Schnittstelle (9a,9b) und/oder die zweite elektrische Schnittstelle (9c,9d) des ersten Kupplungsteils (3) und/oder des zweiten Kupplungsteils (4) mindestens einen ersten Kontakt (11a) aufweist, insbesondere jeweils mindestens einen ersten Kontakt (11a,11c,11e,11g) und mindestens einen zweiten Kontakt (11b,11d,11f,11h) aufweist.

6. Verbindungsanordnung (1) nach einem der vorhergehenden Ansprüche,
**dadurch gekennzeichnet, dass**
die Mittelachsen der ersten Fluidleitungsschnittstelle (7a,7b) und/oder der zweiten Fluidleitungsschnittstelle (7c,7d) und/oder der ersten elektrischen Schnittstelle (9a,9b) und/oder der zweiten elektrischen Schnittstelle (9c,9d) in einer gemeinsamen Ebene angeordnet sind.

7. Verbindungsanordnung nach einem der vorhergehenden Ansprüche,
**dadurch gekennzeichnet, dass**
auch die zweite Fluidleitungsschnittstelle (7c,7d) und die zweite elektrische Schnittstelle (9c,9d) parallel zu einer Steckachse des ersten Kupplungsteils (3) und des zweiten Kupplungsteils (4) ausgerichtet sind.

8. Verbindungsanordnung (1) nach einem der vorhergehenden Ansprüche,
**dadurch gekennzeichnet, dass**
der erste elektrische Leiter (8b) des zweiten Kupplungsteils (4) zumindest teilweise entlang der ersten Fluidleitung (2b) des zweiten Kupplungsteils (4) geführt ist,
dass ein zweiter elektrischer Leiter (8c) des zweiten Kupplungsteils (4) zumindest teilweise entlang der zweiten Fluidleitung (2c) des zweiten Kupplungsteils (4) geführt ist,
und dass der erste Leiter (8b) und der zweite Leiter (8c) über eine mit einem ersten Kontakt (11e) und einem zweiten Kontakt (11f) ausgebildete erste elektrische Schnittstelle (9b) des zweiten Kupplungsteils (4) kontaktierbar sind oder dass der erste Leiter (8b) und der zweite Leiter (8c) über eine mit einem ersten Kontakt (11e) ausgebildete erste elektrische Schnittstelle (9b) des zweiten Kupplungsteils (4) und über eine mit einem ersten Kontakt (11g) ausgebildete zweite elektrische Schnittstelle (9d) des zweiten Kupplungsteils (4) kontaktierbar sind,
oder dass der erste Leiter (8b) über eine mit einem ersten Kontakt (11e) und einem zweiten Kontakt (11f) ausgebildete erste elektrische Schnittstelle (9b) des zweiten Kupplungsteils (4) und der zweite Leiter (8c) über eine mit einem ersten Kontakt (11g) und einem zweiten Kontakt (11h) ausgebildete zweite elektrische Schnittstelle (9d) des zweiten Kupplungsteils (4) kontaktierbar ist.

9. Verbindungsanordnung (1) nach einem der vorhergehenden Ansprüche,
**dadurch gekennzeichnet, dass**
das erste Kupplungsteil (3) eine zweite elektrische Schnittstelle (9c) aufweist,
die erste elektrische Schnittstelle (9a) des ersten Kupplungsteils (3) einen ersten elektrischen Kontakt (11a) und einen zweiten elektrischen Kontakt (11b) aufweist,
dass die zweite elektrische Schnittstelle (9c) des ersten Kupplungsteils (3) einen ersten elektrischen Kontakt (11c) und einen zweiten elektrischen Kontakt (11d) aufweist, und dass im ersten Kupplungsteil (3) der erste Kontakt (11a) der ersten elektrischen Schnittstelle (9a) mit dem ersten Kontakt (11c) der zweiten elektrischen Schnittstelle (9c) elektrisch verbunden ist.

10. Verbindungsanordnung (1) nach einem der vorhergehenden Ansprüche,
**dadurch gekennzeichnet, dass**
das zweite Kupplungsteil (4) mindestens zwei Gehäuseteile (6a,6b) aufweist, insbesondere einen ersten Gehäuseteil (6a) mit der ersten Fluidleitung (2b), der ersten Fluidleitungsschnittstelle (7b) und der ersten elektrischen Schnittstelle (9b), und einen zweiten Gehäuseteil (6b) mit der zweiten Fluidleitung (2c), einer zweiten Fluidleitungsschnittstelle (7d) und einer zweiten elektrischen Schnittstelle (9d).

11. Verbindungsanordnung (1) nach Anspruch 10,
**dadurch gekennzeichnet, dass**
das erste Gehäuseteil (6a) und das zweite Gehäuseteil (6b) miteinander formschlüssig, kraftschlüssig und/oder kraftformschlüssig verbindbar sind, insbesondere miteinander verrastbar, verklemmbar und/oder verschraubbar sind.

12. Verbindungsanordnung (1) nach Anspruch 10 oder 11,
**dadurch gekennzeichnet, dass**
das erste Gehäuseteil (6a) und das zweite Gehäuseteil (6b) zusätzlich jeweils eine elektrische Querverbindungsschnittstelle (13a,13b) aufweisen, und dass mit der Querverbindungsschnittstelle (13a,13b) eine elektrische Verbindung zwischen dem ersten elektrischen Leiter (8b) in dem ersten Gehäuseteil (6a) und einem zweiten elektrischen Leiter (8c) in dem zweiten Gehäuseteil (6b) herstellbar ist, so dass der erste elektrische Leiter (8b) und der zweite elektrische Leiter (8c) des zweiten Kupplungsteils (4) in Reihe geschaltet sind.

13. Verbindungsanordnung (1) nach einem der vorhergehenden Ansprüche, **dadurch gekennzeichnet, dass**
der Fluidleitungsteiler (10) eine T-Form, eine h-Form oder eine Y-Form aufweist.

14. Verbindungsanordnung (1) nach einem Ansprüche 4 bis 13,
**dadurch gekennzeichnet, dass**
die erste elektrische Schnittstelle (9b) des zweiten Kupplungsteils (4) und die zweite elektrische Schnittstelle (9d) des zweiten Kupplungsteils (4) auf einer Seite der Fluidleitungsschnittstelle (7b) angeordnet sind, insbesondere sind die elektrischen Schnittstellen (9b, 9d) und die Fluidleitungsschnittstelle (7b) in einer Ebene angeordnet.

15. Kupplungsteil (4) für eine Verbindungsanordnung (1), insbesondere nach einem der vorhergehenden Ansprüche, aufweisend mindestens eine erste Fluidleitung (2a,2b), mindestens eine erste Fluidleitungsschnittstelle (7a,7b), mindestens einen ersten elektrischen Leiter (8a,8b), mindestens eine erste elektrische Schnittstelle (9a,9b), mindestens eine zweite elektrische Schnittstelle (9c,9d),
und mindestens einen Fluidleitungsteiler (10),
wobei die erste elektrische Schnittstelle (9a,9b) des Kupplungsteils (3,4) und die zweite elektrische Schnittstelle (9c,9d) des Kupplungsteils (3,4) auf einer Seite der Fluidleitungsschnittstelle (7a,7b) angeordnet sind,
**dadurch gekennzeichnet, dass** das Kupplungsteil (4) mindestens eine zweite Fluidleitung (2c) aufweist.

## Claims

1. A connector arrangement (1) for connecting heatable fluid lines, the connector arrangement (1) comprising at least one first coupling component (3) and at least one second coupling component (4), the first coupling component (3) being connectable to the second coupling component (4), the first coupling component (3) and the second coupling component (4) each include at least one first fluid line (2a,2b), at least one first fluid line interface (7a,7b), at least one first electrical conductor (8a,8b), and at least one first electrical interface (9a,9b), wherein the first fluid line interfaces (71,7b) and the first electrical interfaces (9a,9b) are oriented parallel to an axis of insertion of the first coupling component (3) and the second coupling component (4),
**characterized in that** the first coupling component (3) and/or the second coupling component (4) includes at least one fluid line splitter (10), and the second coupling component (4) including at least one second fluid line (2c).

2. The connector arrangement (1) according to claim 1,
**characterized in that** the second fluid line (2c) of the second coupling component (4) is connected to the fluid line splitter (10), preferably the second coupling component (4) includes a second electrical conductor (8c).

3. The connector arrangement (1) according to claim 1 or claim 2,
**characterized in that** the first coupling component (3) and the second coupling component (4) include a second fluid line interface (7c,7d).

4. The connector arrangement (1) according to any of the preceding claims, **characterized in that** the first coupling component (3) and the second coupling component (4) each include a second electrical interface (9c,9d).

5. The connector arrangement (1) according to any of the preceding claims, **characterized in that** the first electrical interface (9a,9b) and/or the second electrical interface (9c,9d) of the first coupling component (3) and/or the second coupling component (4) include at least one first contact (11a), in particular each of them include at least one first contact (11a,11c,11e,11g) and at least one second contact (11b,11d,11f,11h).

6. The connector arrangement (1) according to any of the preceding claims, **characterized in that** the central axes of the first fluid line interface (7a,7b) and/or of the second fluid line interface (7c,7d) and/or of the first electrical interface (9a,9b) and/or of the second electrical interface (9c,9d) are disposed in a common plane.

7. The connector arrangement (1) according to any of the preceding claims, **characterized in that** also the second fluid line interface (7c,7d) and the second electrical interface (9c,9d) are oriented parallel to an axis of insertion of the first coupling component (3) and the second coupling component (4).

8. The connector arrangement (1) according to any of the preceding claims, **characterized in that** the first electrical conductor (8b) of the second coupling component (4) is at least partially guided along the first fluid line (2b) of the second coupling component (4), **in that** a second electrical conductor (8c) of the second coupling component (4) is at least partially guided along the second fluid line (2c) of the second coupling component (4), and **in that** the first conductor (8b) and the second conductor (8c) can be contacted via a first electrical interface (9b), formed with a first contact (11e) and a second contact (11f), of the second coupling component (4) or **in that** the first conductor (8b) and the second conductor (8c) can be contacted via a first electrical interface (9b), formed with a first contact (11e), of the second coupling part (4) and via a second electrical interface (9d), formed with a first contact (11g), of the second coupling part (4), or that the first conductor (8b) can be contacted via a first electrical interface (9b), formed with a first contact (11e) and a second contact (11f), of the second coupling part (4), and the second conductor (8c) can be contacted via a second electrical interface (9d), formed with a first contact (11g) and a second contact(11h), of the second coupling part (4).

9. The connector arrangement (1) according to any of the preceding claims, **characterized in that** the first coupling component (3) includes a second electrical interface (9c), the first electrical interface (9a) of the first coupling component (3) includes a first electrical contact (11a) and a second electrical contact (11b), the second electrical interface (9c) of the first coupling component (3) includes a first electrical contact (11c) and a second electrical contact (11d), and in the first coupling component (3) the first electrical contact (11a) of the first electrical interface (9a) is electrically connected to the first contact (11c) of the second electrical interface (9c).

10. The connector arrangement (1) according to any of the preceding claims, **characterized in that** the second coupling component (4) includes at least two housing components (6a,6b), in particular a first housing component (6a) with the first fluid line (2b), the first fluid interface (7b) and the first electrical interface (9b), and a second housing component (6b) with the second fluid line (2c), a second fluid interface (7d) and a second electrical interface (9d).

11. The connector arrangement (1) according to claim 10,
**characterized in that** the first housing component (6a) and the second housing component (6b) can be connected, in particular latched, clamped and/or screwed to each other in a form-fitting manner, force-fitting manner and/or force- and form-fitting manner.

12. The connector arrangement (1) according to claim 10 or claim 11,
**characterized in that** the first housing component (6a) and the second housing component (6b) each additionally include an electrical cross-connection interface (13a,13b), the electrical cross-connection interface (13a,13b) providing an electrical connection between the first electrical conductor (8b) in the first housing component (6a) and a second electrical conductor (8c) in the second housing component (6b) whereby the first electrical conductor (8b) and the second electrical conductor (8c) of the second coupling component (4) are switched in series.

13. The connector arrangement (1) according to any of the preceding claims, **characterized in that** the fluid line splitter (10) is one of a T-shape, an h-shape or a Y-shape.

14. The connector arrangement (1) according to any of claims 4 to 13,
**characterized in that** the first electrical interface (9b) of the second coupling component (4) and the second electrical interface (9d) of the second coupling component (4) are arranged at one side of the first fluid interface (7b), the electrical interfaces (9b,9d) and the first fluid interface (7b) are particularly disposed in one plane.

15. A coupling component (4) of a connector arrangement (1), in particular according to any of the preceding claims,
comprising at least one first fluid line (2a,2b), at least one first fluid line interface, at least one first electrical conductor, at least one first fluid interface (7a,7b), at least one first electrical conductor (8a,8b), at least one first electrical interface (9a,9b), at least one second electrical interface (9c,9d) and at least one fluid line splitter (10),
wherein the first electrical interface (9a,9b) of the coupling component (3,4) and the second electrical interface (9c,9d) of the coupling component (3,4) are arranged at one side of the fluid interface (7a,7b),
**characterized in that** the coupling component (4) at least includes one second fluid line (2c).

## Revendications

1. Dispositif de connexion (1) pour raccorder des conduites de fluide (2a, 2b, 2c) chauffable, comprenant au moins une première partie d'accouplement (3) et au moins une deuxième partie d'accouplement (4), la première partie d'accouplement (3) et la deuxième partie d'accouplement (4) pouvant être raccordées l'une à l'autre, la première partie d'accouplement (3) et la deuxième partie d'accouplement (4) comprenant chacune au moins une première conduite de fluide (2a, 2b), au moins une première interface de conduite de fluide (7a, 7b), au moins un premier conducteur électrique (8a, 8b) et au moins une première interface électrique (9a, 9b), et dans lequel les premières interfaces de conduite de fluide (7a, 7b) et les premières interfaces électriques (9a, 9b) sont orientées parallèlement à un axe d'enfichage de la première pièce d'accouplement (3) et de la deuxième pièce d'accouplement (4),
**caractérisé en ce que**
la première pièce d'accouplement (3) et/ou la deuxième pièce d'accouplement (4) présente au moins un diviseur de conduite de fluide (10), et **en ce que** la deuxième pièce d'accouplement (4) présente au moins une deuxième conduite de fluide (2c).

2. Dispositif de connexion (1) selon la revendication 1,
**caractérisé en ce que**
la deuxième conduite de fluide (2c) de la deuxième pièce d'accouplement (4) est reliée au diviseur de conduite de fluide (10), de préférence **en ce que** la deuxième pièce d'accouplement (4) présente un deuxième conducteur électrique (8c).

3. Dispositif de connexion (1) selon la revendication 1 ou 2,
**caractérisé en ce que**
la première partie d'accouplement (3) et la deuxième partie d'accouplement (4) ont une deuxième interface de conduite de fluide (7c, 7d).

4. Dispositif de connexion (1) selon l'une quelconque des revendications précédentes,
**caractérisé en ce que**
la première pièce d'accouplement (3) et la deuxième pièce d'accouplement (4) présentent chacune une deuxième interface électrique (9c, 9d).

5. Dispositif de connexion (1) selon l'une quelconque des revendications précédentes,
**caractérisé en ce que**
la première interface électrique (9a, 9b) et/ou la deuxième interface électrique (9c, 9d) de la première partie d'accouplement (3) et/ou de la deuxième partie d'accouplement (4) présente au moins un premier contact (11a), en particulier présente respectivement au moins un premier contact (11a, 11c, 11e, 11g) et au moins un deuxième contact (11b, 11d, 11f, 11h).

6. Dispositif de connexion (1) selon l'une quelconque des revendications précédentes,
**caractérisé en ce que**
les axes centraux de la première interface de conduite de fluide (7a, 7b) et/ou de la deuxième interface de conduite de fluide (7c, 7d) et/ou de la première interface électrique (9a, 9b) et/ou de la deuxième interface électrique (9c, 9d) sont disposés dans un plan commun.

7. Dispositif de connexion selon l'une quelconque des revendications précédentes,
**caractérisé en ce que**
également la deuxième interface de conduite de fluide (7c, 7d) et la deuxième interface électrique (9c, 9d) sont orientées parallèlement à un axe d'enfichage de la première partie d'accouplement (3) et de la deuxième partie d'accouplement (4).

8. Dispositif de connexion (1) selon l'une quelconque des revendications précédentes,
**caractérisé en ce que**
le premier conducteur électrique (8b) de la deuxième partie d'accouplement (4) est guidé au moins partiellement le long de la première conduite de fluide (2b) de la deuxième partie d'accouplement (4),
qu'un deuxième conducteur électrique (8c) de la deuxième partie d'accouplement (4) est guidé au moins partiellement le long de la deuxième conduite de fluide (2c) de la deuxième partie d'accouplement (4),
et **en ce que** le premier conducteur (8b) et le deuxième conducteur (8c) peuvent être mis en contact par l'intermédiaire d'une première interface électrique (9b) de la deuxième partie de couplage (4), dotée d'un premier contact (11e) et un deuxième contact (11f),
ou **en ce que** le premier conducteur (8b) et le deuxième conducteur (8c) peuvent être mis en contact par l'intermédiaire d'une première interface électrique (9b) de la deuxième partie de couplage (4), dotée d'un premier contact (11e), et par l'intermédiaire d'une deuxième interface électrique (9d), de la deuxième partie de couplage (4), dotée d'un premier contact (11g), ou **en ce que** le premier conducteur (8b) peut être mis en contact par l'intermédiaire d'une première interface électrique (9b) de la deuxième pièce d'accouplement (4), dotée d'un premier contact (11e) et d'un deuxième contact (11f), et le deuxième conducteur (8c) peut être mis en contact par l'intermédiaire d'une deuxième interface électrique (9d) de la deuxième pièce d'accouplement (4), dotée d'un premier contact (11g) et d'un deuxième contact (11h).

9. Dispositif de connexion (1) selon l'une quelconque des revendications précédentes,
**caractérisé en ce que**
la première pièce d'accouplement (3) présente une deuxième interface électrique (9c), la première interface électrique (9a) de la première pièce d'accouplement (3) présente un premier contact électrique (11a) et un deuxième contact électrique (11b),
**en ce que** la deuxième interface électrique (9c) de la première partie d'accouplement (3) présente un premier contact électrique (11c) et un deuxième contact électrique (11d), et **en ce que**, dans la première partie d'accouplement (3), le premier contact (11a) de la première interface électrique (9a) est relié électriquement au premier contact (11c) de la deuxième interface électrique (9c).

10. Dispositif de connexion (1) selon l'une quelconque des revendications précédentes,
**caractérisé en ce que**
la deuxième pièce d'accouplement (4) présente au moins deux parties de boîtier (6a, 6b), en particulier une première partie de boîtier (6a) avec la première conduite de fluide (2b), la première interface de conduite de fluide (7b) et la première interface électrique (9b), et une deuxième partie de boîtier (6b) avec la deuxième conduite de fluide (2c), une deuxième interface de conduite de fluide (7d) et une deuxième interface électrique (9d).

11. Dispositif de connexion (1) selon la revendication 10,
**caractérisé en ce que**
la première partie de boîtier (6a) et la deuxième partie de boîtier (6b) peuvent être reliées l'une à l'autre par complémentarité de forme, de force et/ou par complémentarité de forme et de force, en particulier peuvent être encliquetées, bloquées et/ou vissées l'une à l'autre.

12. Dispositif de connexion (1) selon la revendication 10 ou 11,
**caractérisé en ce que**
la première partie de boîtier (6a) et la deuxième partie de boîtier (6b) présentent en outre chacune une interface de connexion électrique transversale (13a, 13b), et **en ce que** l'interface de connexion transversale (13a, 13b) permet d'établir une connexion électrique entre le premier conducteur électrique (8b) dans la première partie de boîtier (6a) et un deuxième conducteur électrique (8c) dans la deuxième partie de boîtier (6b), de sorte que le premier conducteur électrique (8b) et le deuxième conducteur électrique (8c) de la deuxième partie de couplage (4) sont montés en série.

13. Dispositif de connexion (1) selon l'une quelconque des revendications précédentes,
**caractérisé en ce que**
le diviseur de conduite de fluide (10) a une forme en T, une forme en h ou une forme en Y.

14. Dispositif de connexion (1) selon l'une quelconque des revendications 4 à 13, **caractérisé en ce que**
la première interface électrique (9b) de la deuxième pièce d'accouplement (4) et la deuxième interface électrique (9d) de la deuxième pièce d'accouplement (4) sont disposées sur un côté de l'interface de conduite de fluide (7b), en particulier les interfaces électriques (9b, 9d) et l'interface de conduite de fluide (7b) sont disposées dans un plan.

15. Partie d'accouplement (4) pour un dispositif de connexion (1), notamment selon l'une des revendications précédentes, comprenant au moins une première ligne de fluide (2a, 2b), au moins une première interface de ligne de fluide (7a, 7b), au moins un premier conducteur électrique (8a, 8b), au moins une première interface électrique (9a, 9b), au moins une deuxième interface électrique (9c, 9d), et au moins un diviseur de ligne de fluide (10),
dans lequel la première interface électrique (9a, 9b) de la partie d'accouplement (3, 4) et la deuxième interface électrique (9c, 9d) de la partie d'accouplement (3, 4) sont disposées sur un côté de l'interface de conduite de fluide (7a, 7b),
**caractérisé en ce que**
la pièce d'accouplement (4) présente au moins une deuxième conduite de fluide (2c) .
